## Europäisches Patentamt

(19) **European Patent Office**

**Office européen des brevets**

(11) Veröffentlichungsnummer: **0 194 522**
**B1**

(12) # EUROPÄISCHE PATENTSCHRIFT

(45) Veröffentlichungstag der Patentschrift:
05.12.90

(51) Int. Cl.⁵: **B29C 45/37, B29C 33/42**

(21) Anmeldenummer: **86102607.8**

(22) Anmeldetag: **28.02.86**

(54) **Spritzgiess- oder Presswerkzeug zur Verarbeitung von Kunststoffmassen.**

(30) Priorität: **15.03.85 DE 3509274**

(43) Veröffentlichungstag der Anmeldung:
**17.09.86 Patentblatt 86/38**

(45) Bekanntmachung des Hinweises auf die Patenterteilung:
**05.12.90 Patentblatt 90/49**

(84) Benannte Vertragsstaaten:
**AT BE CH DE FR GB IT LI LU NL SE**

(56) Entgegenhaltungen:
**DE-A- 1 929 875**
**DE-C- 443 136**
**DE-U- 8 233 634**
**US-A- 1 377 786**
**US-A- 4 384 702**

**PATENT ABSTRACTS OF JAPAN, Band 6,**
**Nr. 89 (M-132)[967], 27. Mai 1982; &**
**JP-A-57 27 736 (HITACHI SEISAKUSHO K.K.) 15-02-1982**
**MACHINES PRODUCTION, Nr. 406, 4. April 1985, Seite 7,**
**Boulogne-Billancourt, FR; "Un nouveau tampon dateur**
**permet l'identification des pièces obtenues par**
**moulage"**

(73) Patentinhaber: **HASCO-Normalien Hasenclever + Co,**
**Westerfelder Weg 90, D-5880 Lüdenscheid(DE)**

(72) Der Erfinder hat auf seine Nennung verzichtet

(74) Vertreter: **Ostriga, Harald, Dipl.-Ing. et al, Patentanwälte**
**Dipl.-Ing. Harald Ostriga Dipl.-Ing. Bernd Sonnet**
**Stresemannstrasse 6-8, D-5600 Wuppertal 2(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Spritzgieß- oder Preßwerkzeug entsprechend dem Oberbegriff des Patentanspruchs 1.

Ein derartiges Spritzgieß- oder Preßwerkzeug ist bereits aus der US-A 4 384 702 bekannt. Es wird bei diesem Werkzeug als nachteilig empfunden, daß der Markierungseinsatz mit Preßsitz innerhalb der jeweiligen Aufnahmebohrung angeordnet ist und im Bedarfsfall mittels eines Werkzeuges über eine Hilfsbohrung herausgeschlagen werden muß. Im Gegensatz zu dem ebenfalls bekannten Markierungseinsatz gemäß DE-A 1 929 875 ist der Markierungseinsatz gemäß US-A 4 384 702 zwar vorteilhafterweise sehr kompakt, d.h. sämtliche Einzelteile sind in einer geschlossenen Baugruppe enthalten, jedoch wird es als ungünstig empfunden, daß die Markierungseinstellung bei unrichtiger Handhabung zweideutig sein kann.

Ausgehend von dem Markierungseinsatz gemäß US-A 4 384 702 liegt der Erfindung die Aufgabe zugrunde, den eine Normalie bildenden bekannten Markierungseinsatz kompakter Bauweise so weiterzuentwickeln, daß ein einfacherer Einbau und eine genauere unproblematische Einstellbarkeit erzielt wird. Diese Aufgabe ist entsprechend dem Kennzeichenteil des Patentanspruchs 1 gelöst worden.

Beim erfindungsgemäßen Markierungseinsatz ist zunächst von Vorteil, daß es im Rahmen einer kompakteren Bauweise nunmehr möglich ist, die eine genaue Einstellung gestattende Rastverstellung - im Unterschied zur gattungsfremden US-A 1 377 786 - geschützt im Ringbund des Zentralkörpers anzuordnen.

Der erfindungsgemäße Aufbau des Markierungseinsatzes ermöglicht zugleich dessen Anordnung innerhalb einer Stufenbohrung, die lediglich - mit dem Vorteil einer leichtgängigen Montage und Demontage - eine Feinpassung, nicht aber eine nachteilige Preßpassung, erfordert.

Wichtig ist es bei dem erfindunsgemäßen Markierungseinsatz auch, daß der Zentralkörper raststufenweise relativ zu dem ihn umgebenden kreiszylindrischen Ringkörper verstellt werden kann. Hierbei ist die Raststufen-Umfangsteilung so gewählt, daß sie mit der Umfangsteilung der Markierungen fluchtet. Die Raststufen dienen zum einen einer genauen unzweideutigen Einstellbarkeit der gewünschten Markierung. Zum anderen sind die Rastkräfte zwischen den formschlüssig ineinandergreifenden Rastelementen so groß bemessen, daß eine unbeabsichtigte Verstellung einer gewählten Kombination unmöglich ist.

Weitere Vorteile entsprechend der Erfindung ergeben sich aus zusätzlichen Unteransprüchen.

In den Zeichnungen ist ein bevorzugtes Ausführungsbeispiel entsprechend der Erfindung näher dargestellt, es zeigen,

Fig. 1 einen axialen Längsschnitt mit schematisch angedeuteter Einbaulage eines Markierungseinsatzes, im Maßstab 5 : 1,

Fig. 2 eine Ansicht etwa im Maßstab 5 : 1 der rückwärtigen Stirnfläche des isoliert dargestellten Markierungseinsatzes entsprechend dem Ansichtspfeil II in Fig. 1, wobei ein Teilbereich des Zentralkörpers in Schnittansicht dargestellt ist,

Fig. 3 eine Stirnansicht auf die vordere mit Markierungen versehene Stirnfläche des isoliert im Maßstab 2 : 1 dargestellten Markierungseinsatzes entsprechend dem mit III bezeichneten Ansichtspfeil in Fig. 1.

In den Zeichnungen ist ein Markierungseinsatz insgesamt mit der Bezugsziffer 10 versehen.

Der Markierungseinsatz 10 weist einen äußeren Ringkörper 11 und einen inneren Zentralkörper 12 auf. Der Ringkörper 11 ist mit einem rückwärtigen Ringbund 13 versehen, dem etwa in gleicher axialer Lage ein Ringbund 14 des Zentralkörpers 12 entspricht. Zur auswechselbaren Aufnahme des Zentralkörpers 12 weist der Ringkörper 11 ein Stufenbohrung 15 auf, deren Erweiterung 16 den zentralkörperseitigen Ringbund 14 aufnimmt.

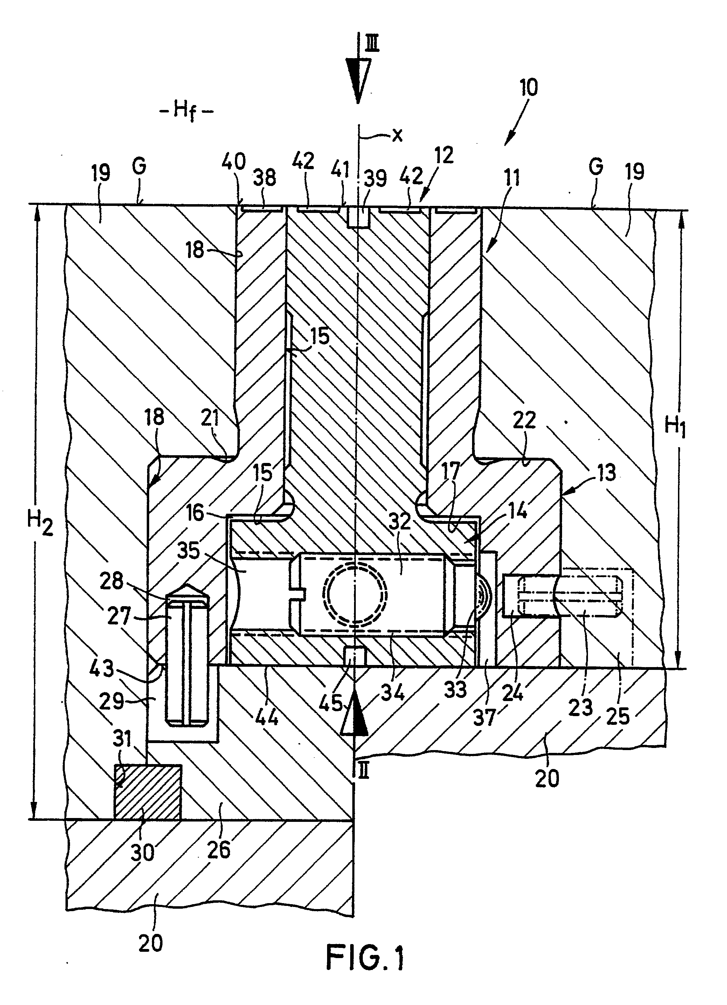

Beide Bauteile 11 und 12 sind im wesentlichen rotationssymmetrisch, d.h. kreiszylindrisch, ausgebildet. Zur Montage des Markierungseinsatzes 10 wird dessen Zentralkörper 12 in Richtung des mit II bezeichneten Ansichtspfeiles in Fig. 1 in den Ringkörper 11 eingeschoben, wobei die ringförmige Anschlagschulter 17 eine Einschubbegrenzung bildet.

Aus Fig. 1 ist zu ersehen, daß der Markierungseinsatz 10 in einer Durchgangs-Stufenbohrung 18 einer Formplatte bzw. eines Formeinsatzes 19 aufgenommen ist. Der Formeinsatz 19 kann entweder entsprechend der Darstellung rechts in Fig. 1 eine Dicke $H_1$ oder aber entsprechend der Darstellung links in Fig. 1 eine größere Dicke $H_2$ aufweisen.

Für den Fall der Dicke $H_1$ ist die Axiallänge des Markierungseinsatzes 10, gemessen entlang seiner Drehmittelachse x, gleich der Dicke $H_1$ des Formeinsatzes 19. Zur Montage wird demnach der Markierungseinsatz 10 in Richtung desmit II bezeichneten Ansichtspfeils in Fig. 1 in die Stufenbohrung 18 des Formeinsatzes 19 eingeschoben. Hierauf wird die Formhalteplatte 20 eingebaut, welche den Formeinsatz bzw. die Formplatte 19 und den Markierungseinsatz 10 bündig hinterlagert und axialunverschieblich innerhalb der Stufenbohrung 18 positioniert. Die Erweiterung der Stufenborung 18 zur Aufnahme des ringkörperseitigen Ringbundes 13 ist mit 21 bezeichnet. Die von der Stufenbohrung 18 gebildete Anschlagschulter für den Ringbund 13 trägt das Bezugszeichen 22.

Für den Fall, daß die Dicke des Formeinsatzes $H_1$ beträgt, ist zur Drehsicherung des Markierungseinsatzes 10 ein in Fig. 1 gestrichelt eingezeichneter Schwerspannstift 23 vorgesehen. Dieser steckt in einer nach außen offenen radial ausgerichteten Sackbohrung 24 des Ringbundes 13 und greift zugleich in eine in Fig. 1 gestrichelt eingezeichnete und zur Formhalteplatte 20 hin offene Ausnehmung 25 des Formeinsatzes 19 ein. Die Querweite der Ausnehmung 25 entspricht dem Außendurchmesser des Schwerspannstiftes 23.

Für den Fall, daß die Dicke des Formeinsatzes 10 das Maß $H_2$ aufweist, muß eine Distanzscheibe 26 in den hinteren Bereich des Stufenbohrung 18 eingesetzt werden, welche den verbleibenden Zwischenraum bis zur Formhalteplatte 20 bündig überbrückt. In diesem Falle ist zur Drehsicherung des Markierungseinsatzes 10 zunächst ein anderer Schwerspannstift 27 vorgesehen, welcher in einer Axialbohrung 28 des Ringbundes 13 steckt. Zugleich greift der Schwerspannstift 27 in eine zum Markierungseinsatz 10 hin offene Aussparung 29 im Randbereich der Distanzscheibe 26 ein. Die Querweite der Aussparung 29 ist dem Außendurchmesser des Schwerspannstiftes 27 angepaßt. Die Distanzscheibe 26 ist schließlich mittels eines Einlegstückes 30 festgelegt, welches in einer gemeinsam vom Formeinsatz 19 und von der Distanzscheibe 26 gebildeten Aussparung 31 einliegt.

Zur raststufenweisen Drehverstellung des Zentralkörpers 12 ist in dessen in Ringbund 14 ein Einsatz 32 vorgesehen, der eine federnd gelagerte Rastkugel 33 aufweist und der, da er mit einem Außengewinde 34 versehen ist, in eine radiale Durchgangs-Gewindebohrung 35 innerhalb des Ringbundes 14 eingeschraubt ist. Die axiale Einstelllage des Einsatzes 32 ist über eine im Ringbund 14 gehaltene sich quer zur Bohrung 35 erstreckende Stiftschraube 36 gesichert.

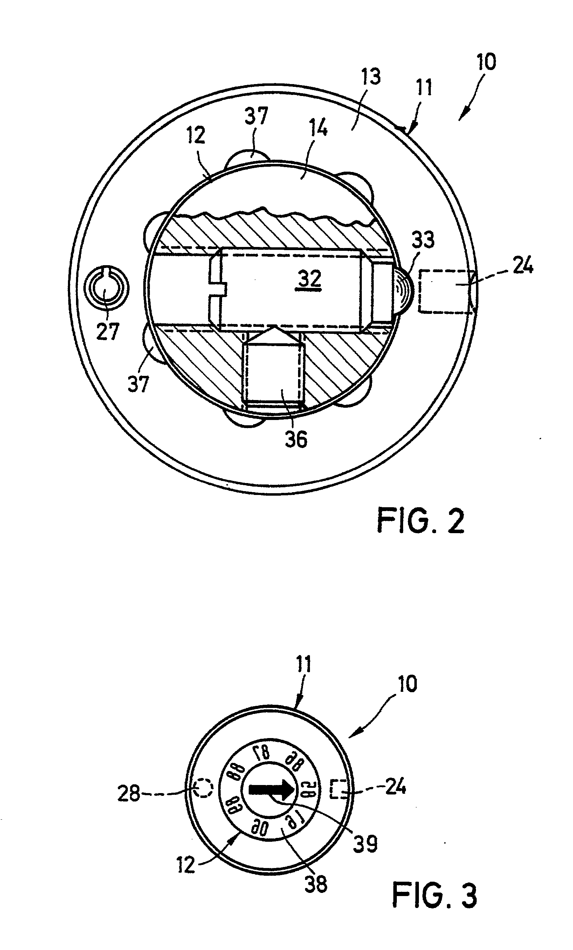

Die Rastkugel 33 arbeitet mit Rastausnehmungen 37 mit jeweils etwa teilkreiszylindrischem Querschnitt zusammen, die an der Innenfläche des ringkörperseitigen Ringbundes 13 vorgesehen sind. Wie aus Fig. 3 zu ersehen, weist die Innenfläche des Ringkörpers 13 sieben Rastaussparungen 37 auf, welche unterschiedlichen Jahreszahlen 85-91 fluchtend zugeordnet sind. Die Rastausnehmungen 37 lassen sich verhältnismäßig einfach entweder mittels eines Fingerfräsers oder eines Bohrers herstellen.

Die Jahreszahlen 85-91 bilden raumfeste Markierungen 38, mit der eine drehbewegliche Markierung 39 in Bezug gesetzt und die eingestellte Kombination dadurch gesichert werden kann, daß die Rastkugel 33 in eine bestimmte Rastaussparung 37 eingreift. Die die formbildenden Markierungen 38, 39 tragenden Stirnflächen sind mit 40 (raumfeste ringförmige vordere Stirnfläche des Ringkörpers 11) bzw. mit 41 (drehbewegliche vollkreisförmige vordere Stirnfläche des Zentralkörpers 12) bezeichnet.

Die Stirnflächen 40, 41 bilden somit Bestandteil der Gravur G des Formeinsatzes 19, welcher die mit H_F bezeichnete Formhöhlung begrenzt.

Da, wie im vorliegenden Falle, die drehverstellbare und zugleich als Pfeil ausgebildete Markierung 39 einen Schlitz für die Klinge eines Schraubendrehers bildet, kann der Zentralkörper 12 bei geöffneter Form von der Formhöhlung H_F her relativ leicht in eine andere Einstellposition versetzt werden. Gemäß Fig. 1 sind noch weitere formbildende Markierungen 42 innerhalb der Stirnfläche 41, vorgesehen, welche - strahlenförmig angeordnet - mehr einen Ziercharakter haben.

Auch die rückwärtigen Stirnflächen 43, 44 des Ringkörpers 11 bzw. des Zentralkörpers 12 sind bündig zueinander angeordnet, wobei die rückwärtige Stirnfläche 44 des Zentralkörpers 12 ebenfalls mit einem Eingriffsschlitz 45 für die Klinge eines Schraubendrehers versehen ist. Auf diese Weise ist bei Bedarf auch eine rückwärtige Drehverstellung des Zentralkörpers 12 - bei abgenommener Formhalteplatte 20 - möglich.

Aus den vorstehenden Ausführungen wird deutlich, daß der Markierungseinsatz 10 eine leicht einbaubare Normalie bildet. Hierbei ist auch zu berücksichtigen, daß der Zentralkörper 12 in der beschriebenen oder in einer ähnlichen Form mit unterschiedlich ausgebildeten Ringkörpern 11 zusammenwirken kann. So kann - abweichend vom dargestellten Ausführungsbeispiel - die vordere Stirnfläche 40 des Ringkörpers 11 mit zwölf Monatsziffern und - hieran angepaßt - mit zwölf Rastausnehmungen 37 versehen sein.

**Patentansprüche**

1. Spritzgieß- oder Preßwerkzeug zur Verarbeitung von plastischen Massen, insbesondere von Kunststoffmassen, mit einem Markierungseinsatz (10), der einen in einer Aufnahmebohrung (18) eines Formeinsatzes (19) des Werkzeugs raumfest festlegbaren äußeren kreiszylindrischen Ringkörper (11) besitzt, dessen mit der angrenzenden Formwand (G) des Formeinsatzes (19) bündige kreisringförmige Stirnfläche (40) eine erste formbildende Markierung (38) aufweist, wobei im Ringkörper (11) koaxial dreh- und feststellbar ein kreiszylindrischer Zentralkörper (12) angeordnet ist, dessen mit ihm drehbare, mit der angrenzenden Stirnfläche (40) des Ringkörpers (11) und der angrenzenden Formwand (G) bündige Stirnfläche (41) eine zweite formbildende Markierung (42) aufweist, wobei der Ringkörper (11) zur Aufnahme des Zentralkörpers (12) in seinem der Gravurfläche (G) abgewandten Axialbereich eine Erweiterung (16) einer Stufenbohrung (15) mit einer ringförmigen Anschlagschulter (17) bildet, auf welcher sich ein der Formwand (G) abgewandter rückwärtiger Ringbund (14) des Zentralkörpers (12) abstützt, dadurch gekennzeichnet, daß der rückwärtige Axialbereich des Ringkörpers (11) zur Aufnahme des zentralkörperseitigen Ringbundes (14) ebenfalls als Ringbund (13) ausgebildet ist, wobei die Aufnahmebohrung (18) innerhalb des Formeinsatzes (19) in Anpassung an die Außenform des Ringkörpers (11) als Stufenbohrung (18) ausgebildet ist, und wobei zur raststufenweisen Drehverstellung des Zentralkörpers (12) innerhalb einer den Ringbund (14) des Zentralkörpers (12) radial durchsetzenden Bohrung (35) ein federndes Druckstück (32) mit einer Rastkugel (33) eingesetzt ist, welche mit an der Innenmantelfläche des Ringkörpers (11) vorgesehenen, in der Anzahl der einstellbaren Markierungen vorhandenen Rastausnehmungen (37) zusammenwirkt.

2. Spritzgieß- oder Preßwerkzeug nach Anspruch 1, dadurch gekennzeichnet, daß das Einsatzstück (32) mittels einer rechtwinklig zur Gewindebohrung (35) im Zentralkörper (12) angeordneten Stiftschraube (36) festlegbar ist.

3. Spritzgieß- oder Preßwerkzeug nach Anspruch 1 oder 2, dadurch gekennzeichnet, daß die vordere Stirnfläche (41) des Zentralkörpers (12) nur mit einer zentral angeordneten und sich radial erstreckenden Markierungen (39) versehen ist, die zugleich Betätigungsflächen für ein Stellwerkzeug, z.B. für die Klinge eines Schraubendrehers bildet.

4. Spritzgieß- oder Preßwerkzeug nach einem der Ansprüche 1 bis 3, dadurch gekennzeichnet, daß auch die der Gravurfläche (G) abgewandte rückwärtige Stirnfläche (44) des Zentralkörpers (12) mit Betätigungsflächen für ein Stellwerkzeug, beispielsweise mit einem Schlitz (45) für die Klinge eines Schraubendrehers, versehen ist.


## Claims

1. Injection or compression mould for processing plastic materials, in particular synthetic materials, with a marking insert (10), which comprises an outer circular cylindrical ring member (11), which can be fixed in space in a holding bore (18) of a mould insert (19) and whose circular end face (40), which is flush with the adjacent mould wall (G) of the mould insert (19), comprises a first marking (38) which forms the mould, a circular cylindrical central member (12) being arranged such that it can be rotated and fixed coaxially in the ring member (11), the end face (41) of which central member, which can rotate with the latter and is flush with the adjacent end face (40) of the ring member (11) and the adjacent mould wall (G), comprises a second marking (42) which forms the mould, the ring member (11) forming a widened part (16) of a stepped bore (15) with an annular stop shoulder (17) in its axial area which is distant from the engraved surface (G) for holding the central member (12), on which shoulder a rear collar (14), which is distant from the mould wall (G), of the central member (12), is supported, characterized in that the rear axial area of the ring member (11) is also formed as a collar (13) to hold the collar (14) on the central member, the holding bore (18) inside the mould insert (19) being formed as a stepped bore (18) so as to conform to the external shape of the ring member (11), and a resilient thrust piece (32) with a locking ball (33) being inserted in a hole (35), which passes radially through the collar (14) of the central member (12), for the rotational adjustment of the central member (12) in locking steps, which ball cooperates with locking recesses (37), which are provided at the inner surface of the ring member (11) and the number of which corresponds to that of the markings which can be set.

2. Injection or compression mould according to claim 1, characterised in that the insert (32) can be secured by means of a set screw (36), which is arranged at a right angle to the tapped hole (35) in the central member (12).

3. Injection or compression mould according to claim 1 or 2, characterised in that the front end face (41) of the central member (12) is only provided with one marking (39), which is arranged centrally, extends radially and at the same time forms operating surfaces for an adjusting tool, e.g. for the blade of a screwdriver.

4. Injection or compression mould according to one of claims 1 to 3, characterised in that the rear end face (44), which is distant from the engraved surface (G), of the central member (12) is also provided with operating surfaces for an adjusting tool, for example with a slot (45) for the blade of a screwdriver.


## Revendications

1. Moule pour presse de moulage par injection ou de moulage par compression, destiné à la transformation de matières plastiques, en particulier de masses de matières plastiques de synthèse, avec un insert (10) de marquage qui possède un corps annulaire (11) en forme de cylindre circulaire à l'extérieur, qui peut être immobilisé, de manière fixe dans l'espace, dans un alésage (18) formant logement dans une garniture (19) de moule et dont la face frontale (40), de forme circulaire et en affleurement avec la paroi (G) de moule mitoyenne de la garniture (19) de moule, présente un premier marquage (38) formant moule, tandis que dans le corps annulaire (11) est disposé, de manière à pouvoir être tourné et immobilisé dans un sens coaxial, un corps central (12) en forme de cylindre circulaire dont la face frontale (41), qui peut tourner avec ce dernier et disposée en affleurement avec la face frontale (40) mitoyenne et la paroi (G) de moule mitoyenne, présente un second marquage (42) formant moule, tandis que le corps annulaire (11) forme, pour recevoir le corps central (12), dans sa zone axiale orientée à l'opposé de la surface de gravure (G), un élargissement (16) d'un alésage étagé (15) avec un épaulement de butée (17) de forme annulaire sur lequel prend appui un collet annulaire (14) sur l'arrière du corps central (12), orienté à l'opposé de la paroi (G) du moule, caractérisé par le fait que la zone axiale à l'arrière du corps annulaire (11) est également réalisée sous la forme d'un collet annulaire (13) pour recevoir le collet annulaire (14) prévu côté corps central, tandis que l'alésage (18) formant logement au sein de la garniture (19) de moule est réalisé en forme d'alésage étagé (18) pour être adapté à la forme extérieure du corps annulaire (11), et tandis qu'un organe de pression (32) faisant ressort et comportant une bille de crantage (33), qui coopère avec des créneaux de crantage (37) prévus à la surface de l'enveloppe intérieure du corps annulaire (11) dans la quantité des marquages pouvant être sélectionnés, est mis en œuvre pour le repositionnement en rotation du corps central (12) par pas de crantage à l'intérieur d'un perçage (35) traversant de part en part dans le sens radial le collet annulaire (14) du corps central (12).

2. Moule pour presse de moulage par injection ou de moulage par compression selon la revendication 1, caractérisé par le fait que la pièce de garniture (32) peut être immobilisée au moyen d'un goujon fileté (36) disposé à angle droit par rapport au perçage taraudé (35) dans le corps central (12).

3. Moule pour presse de moulage par injection ou de moulage par compression selon la revendication 1 ou 2, caractérisé par le fait que la face frontale (41) avant du corps central (12) est uniquement munie d'un marquage (39) qui, disposé au centre et s'étendant dans le sens radial, forme en même temps des faces de manipulation pour un outil de positionnement, par exemple pour la lame d'un tournevis.

4. Moule pour presse de moulage par injection ou de moulage par compression selon les revendications 1 à 3, caractérisé par le fait que la face frontale (44) arrière, orientée à l'opposé de la face à gravure (G), sur le corps central (12), est également munie de faces de manipulation pour un outil de positionnement, par exemple d'une fente (45) pour la lame d'un tournevis.

FIG.1

FIG. 2

FIG. 3